# FASCICULE DE BREVET EUROPEEN

(11) **EP 4 606 546 B1**
(45) Date de publication et mention de la délivrance du brevet: **23.09.2026**
(21) Numéro de dépôt: 25159289.5
(22) Date de dépôt: 21.02.2025
(51) Int. Cl.: B29C 44/04, B29C 44/06, B29C 44/08, B60N 2/70, B29C 44/58

(54) **PROCÉDÉ DE FABRICATION D'UN ÉLÉMENT DE REMBOURRAGE POUR SIÈGE DE VÉHICULE**
VERFAHREN ZUR HERSTELLUNG EINES POLSTERELEMENTS FÜR EINEN FAHRZEUGSITZ
METHOD FOR PRODUCING A CUSHION ELEMENT FOR A VEHICLE SEAT

(30) Priorité: 22.02.2024 FR 2401762
(43) Date de publication de la demande: 27.08.2025
(73) Titulaire: FAURECIA Sièges d'Automobile, 92000 Nanterre (FR)
(72) Inventeur: GAZANIOL, Benoit, 91290 ARPAJON (FR); ETIENNE, Fabrice, 90800 BAVILLIERS (FR); DESGRANCHAMPS, Jerome, 70000 VESOUL (FR); EL HARFI, Jaouad, 90000 BELFORT (FR)
(74) Mandataire: Novagraaf Group

(56) Documents cités:
- KR-B1- 101 567 144
- US-A1- 2011 039 049
- US-A1- 2018 297 490
- US-A1- 2021 300 221

## Description

La présente invention concerne un procédé de fabrication d'un élément de rembourrage pour siège de véhicule, comprenant un bloc de mousse, comprenant une première et une deuxième faces sensiblement opposées; et une couche de renfort, solidaire de la première face du bloc de mousse.

Un élément de rembourrage similaire est notamment connu du document FR3092044 au nom de la Demanderesse. Le document US 2018/297490 A1 divulgue un procédé de fabrication d'un élément de rembourrage pour siège de véhicule et un élément de rembourrage pour siège de véhicule.

La couche de renfort d'un élément de rembourrage tel que décrit ci-dessus est notamment destinée à minimiser l'abrasion sur la face non visible dudit élément de rembourrage. Cependant, la présence d'une telle couche complique les opérations de recyclage de l'élément de rembourrage lorsque le bloc de mousse et la couche de renfort sont de natures chimiques différentes.

Le but de l'invention est de proposer un élément de rembourrage alliant une bonne solidité et une configuration facilitant le recyclage.

A cet effet, l'invention a pour objet un procédé de fabrication d'un élément de rembourrage du type précité, comprenant les étapes suivantes :
- fourniture d'un moule comprenant un fond de moule et un couvercle, aptes à s'assembler de manière amovible pour former une enceinte ;
- le fond de moule et le couvercle étant dissociés, dépôt dans le fond de moule d'une première composition fluide, précurseur du bloc de mousse, ladite première composition fluide comprenant un agent d'expansion ; et dépôt dans le couvercle d'une couche de deuxième composition fluide, précurseur de la couche de renfort ;
- expansion de la première composition fluide ; et assemblage du fond de moule et du couvercle au cours de ladite expansion, de sorte à solidariser le bloc de mousse et la couche de renfort.

Suivant d'autres aspects avantageux de l'invention, le procédé comporte l'une ou plusieurs des caractéristiques suivantes, prises isolément ou suivant toutes les combinaisons techniquement possibles :
- chacune des première et deuxième compositions comprend du polyuréthane ;
- le dépôt de la première composition fluide est réalisé par coulage dans le fond de moule ;
- le dépôt de la couche de deuxième composition fluide est réalisé par pulvérisation sur le couvercle de ladite deuxième composition fluide ;
- le couvercle comprend : une surface de moulage, configurée pour former l'enceinte ; et une nervure continue ou non, formant une périphérie de ladite surface de moulage ;
- la pulvérisation sur le couvercle de la deuxième composition fluide est effectuée sur la surface de moulage et sur la nervure ;
- le procédé comprend l'application d'un agent démoulant sur le couvercle et/ou le fond de moule, avant le dépôt des première et deuxième compositions fluides.

L'invention se rapporte en outre à un élément de rembourrage issu d'un procédé tel que décrit ci-dessus.

Suivant d'autres aspects avantageux de l'invention, l'élément de rembourrage comporte l'une ou plusieurs des caractéristiques suivantes, prises isolément ou suivant toutes les combinaisons techniquement possibles :
- le bloc de mousse comprend au moins 50% en masse de polyuréthane par rapport à une masse totale dudit bloc ; et la couche de renfort comprend au moins 50% en masse de polyuréthane par rapport à une masse totale de ladite couche ;
- le bloc de mousse comprend 100% en masse de polyuréthane par rapport à une masse totale dudit bloc ; et la couche de renfort comprend 100% en masse de polyuréthane par rapport à une masse totale de ladite couche ;
- le bloc de mousse présente une première épaisseur comprise entre 5 mm et 200 mm entre les premières et deuxième faces ; et la couche de renfort présente une deuxième épaisseur comprise entre 30 µm et 5 mm.

L'invention concerne en outre un siège de véhicule, comprenant un élément de rembourrage tel que décrit ci-dessus.

L'invention apparaîtra plus clairement à la lecture de la description qui va suivre, donnée uniquement à titre d'exemple non limitatif, et faite en référence aux dessins dans lesquels :
- la figure 1 est une vue de détail, en coupe, d'un siège de véhicule selon un mode de réalisation de l'invention, comprenant un élément de rembourrage selon un mode de réalisation de l'invention ; et
- la figure 2 est une représentation schématique d'une étape d'un procédé de fabrication de l'élément de rembourrage de la figure 1, selon un mode de réalisation de l'invention.

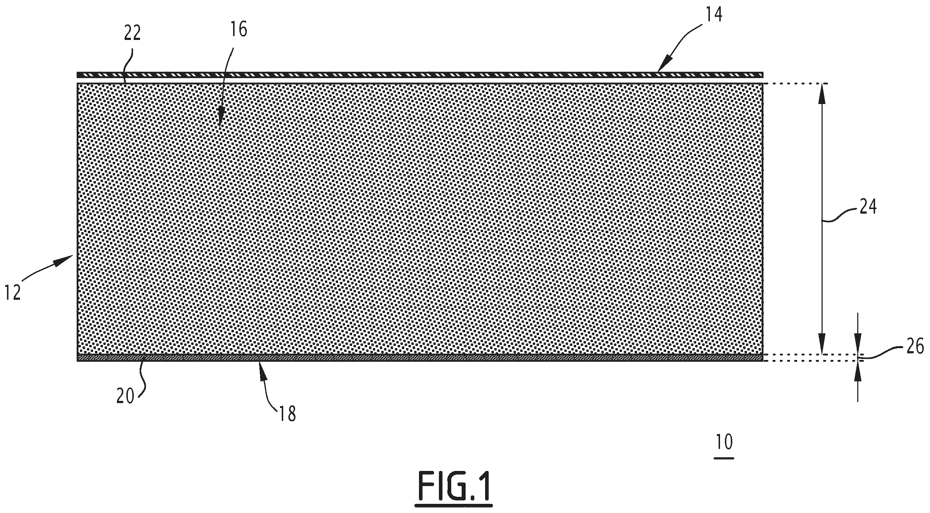

La figure 1 représente schématiquement une vue de détail, en coupe, d'un siège 10 de véhicule selon un mode de réalisation de l'invention. Le siège 10 est destiné à être monté dans un véhicule terrestre, aérien ou maritime par exemple dans une automobile, un bus, un camion, un train, un avion, une moto, un bateau, un véhicule agricole, etc... Le siège 10 comprend notamment un élément 12 de rembourrage et un revêtement 14.

Plus précisément, l'élément 12 de rembourrage et le revêtement 14 de la figure 1 font partie d'une assise du siège 10, ou encore d'un dossier dudit siège 10.

L'élément 12 de rembourrage comprend un bloc 16 et une couche 18 de renfort.

Le bloc 16 est formé en une mousse déformable élastiquement, ladite mousse étant composée d'un premier matériau plastique. Par « mousse », on entend que le bloc 16 présente une structure alvéolaire souple à cellules ouvertures (non représentées).

Préférentiellement, la mousse formant le bloc 16 présente une densité comprise entre 30 Kg/m³ et 100 Kg/m³. Préférentiellement, la mousse formant le bloc 16 présente une caractéristique de contrainte-déformation en pression comprise entre 3 KPa et 30 KPa selon la norme DIN EN ISO 3386.

Préférentiellement, le premier matériau plastique comprend du polyuréthane. Plus préférentiellement, le premier matériau plastique comprend au moins 50% en masse de polyuréthane par rapport à une masse totale dudit premier matériau plastique, encore plus préférentiellement 100% en masse de polyuréthane. Par exemple, lorsque le premier matériau plastique comprend moins de 100% en masse de polyuréthane, le premier matériau plastique comprend du polyuréthane ainsi qu'un matériau bio-sourcé ou recyclé et/ou un matériau issu de pneus et/ou du polytéréphtalate d'éthylène et/ou une charge inorganique.

Le bloc 16 de mousse comprend une première 20 et une deuxième 22 faces, sensiblement opposées. Le bloc 16 présente une première épaisseur 24 entre les première 20 et deuxième 22 faces. Préférentiellement, la première épaisseur 24 est comprise entre 5 mm et 200 mm.

La couche 18 de renfort est solidaire de la première face 20 du bloc 16 de mousse.

La couche 18 de renfort est formée d'un deuxième matériau plastique. Plus préférentiellement, le deuxième matériau plastique est non expansé, c'est-à-dire que ledit deuxième matériau ne comporte pas de cellules fermées.

Préférentiellement, le deuxième matériau plastique comprend du polyuréthane. Plus préférentiellement, le deuxième matériau plastique comprend au moins 50% en masse de polyuréthane par rapport à une masse totale dudit deuxième matériau plastique, préférentiellement 100% en masse de polyuréthane. Selon un exemple spécifique, le deuxième matériau plastique comprend du polyuréthane ainsi qu'un matériau bio-sourcé ou recyclé et/ou un matériau issu de pneus et/ou du polytéréphtalate d'éthylène et/ou une charge inorganique.

Préférentiellement, le deuxième matériau plastique présente une densité comprise entre 200 Kg/m³ et 1 200 Kg/m³.

La couche 18 de renfort présente une deuxième épaisseur 26, préférentiellement comprise entre 30 µm et 5 mm, encore plus préférentiellement entre 250 µm et 2 mm.

Le revêtement 14 du siège 10 est assemblé à la deuxième face 22 du bloc 16 de mousse. Plus précisément, la couche 18 de renfort est destinée à former la face non visible de l'élément 12 de rembourrage dans le siège 10.

Préférentiellement, le revêtement 14 forme une couche flexible. Le revêtement 14 est par exemple formé d'un matériau textile, naturel ou synthétique, ou de cuir naturel ou synthétique.

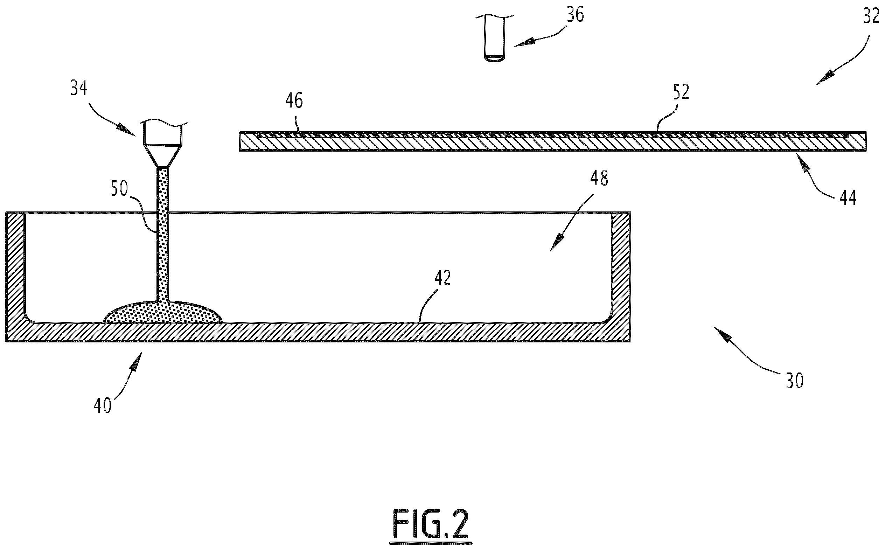

La figure 2 montre une installation 30 pour la fabrication de l'élément 12 de rembourrage décrit ci-dessus.

L'installation 30 comporte notamment un moule 32 et au moins un dispositif 34, 36 d'application.

Le moule 32 comprend : un fond 40 de moule, comportant une première surface 42 ; et un couvercle 44, comportant une deuxième surface 46. La première surface 42 présente notamment une forme complémentaire de la deuxième face 22 du bloc 16 de mousse.

Le fond 40 de moule et le couvercle 44 sont aptes à s'assembler de manière amovible, pour former une enceinte 48 définie par les première 42 et deuxième 46 surfaces.

De préférence, le couvercle 44 comporte une nervure (non représentée), continue ou non, formant une périphérie de la deuxième surface 46. Ladite nervure est apte à s'insérer dans un bord de la première surface 42 du fond 40 de moule, lors de l'assemblage dudit fond 40 et du couvercle 44.

De préférence, le moule 32 comprend en outre des évents (non représentés) permettant un dégazage de l'enceinte 48.

Dans le mode de réalisation représenté, l'installation 30 comporte un premier 34 et un deuxième 36 dispositifs d'application.

Le premier dispositif 34 d'application est apte à déposer une première composition fluide 50 dans le fond 40 de moule, au contact de la première surface 42. La première composition fluide 50 est précurseur du bloc 16 de mousse et comprend un agent d'expansion.

De préférence, le premier dispositif 34 d'application est adapté à un dépôt par coulage de la première composition fluide 50 dans le fond 40 de moule.

Le deuxième dispositif 36 d'application est apte à déposer une deuxième composition fluide 52 dans le couvercle 44, au contact de la deuxième surface 46.

La deuxième composition fluide 52 est précurseur de la couche 18 de renfort. De préférence, la deuxième composition fluide 52 comprend un agent d'expansion, par exemple de l'eau. Avantageusement, la deuxième composition fluide 52 comprend un allongeur de chaîne, par exemple du butanediol, et/ou un réticulant, par exemple du glycérol, et/ou une fibre de renfort, par exemple de la fibre de verre, de la fibre naturelle et/ou de la fibre synthétique, et/ou du graphène et/ou du graphite et/ou du carbone nanotube. L'utilisation d'un allongeur de chaîne, d'un réticulant, d'une fibre de renfort, de graphène, de graphite et/ou de carbone nanotube permet d'améliorer la résistance mécanique de la couche de renfort 18.

De préférence, le deuxième dispositif 36 d'application est adapté à un dépôt par pulvérisation de la deuxième composition fluide 52 dans le couvercle 44.

Un procédé de fabrication de l'élément 12 de rembourrage ci-dessus, au moyen de l'installation 30 décrite ci-dessus, va maintenant être décrit.

De manière optionnelle, un agent de démoulage est tout d'abord appliqué sur les première 42 et deuxième 46 surfaces du moule 32. Un tel agent de démoulage est par exemple sous la forme d'une solution liquide, pulvérisée sur les surfaces concernées. Par exemple, l'agent de démoulage comprend un composé anti-bruit incorporé. Alternativement, un composé anti-bruit est pulvérisé par-dessus l'agent de démoulage après la pulvérisation de l'agent de démoulage.

Ensuite, la deuxième composition fluide 52 est pulvérisée sur la deuxième surface 46 du couvercle 44, au moyen du deuxième dispositif 36 d'application. De préférence, ladite deuxième composition fluide est également pulvérisée sur la nervure formant la périphérie de la deuxième surface 46, et éventuellement autour de ladite nervure.

Ensuite, au moyen du premier dispositif 34 d'application, la première composition fluide 50 est coulée dans le fond 40 de moule, au contact de la première surface 42.

Ensuite, la deuxième composition fluide 52 étant au moins partiellement durcie, le moule 32 est fermé en assemblant le fond 40 de moule et le couvercle 44. L'enceinte 48 est ainsi matérialisée. La première composition fluide 50 s'expanse, remplissant ladite enceinte 48 pour former le bloc 16 de mousse.

Lors de l'expansion de la première composition fluide 50, la mousse ainsi formée adhère à la couche 18 de renfort en cours de durcissement, assurant la solidarisation de ladite couche 18 avec le bloc 16 de mousse.

De préférence, la fermeture du moule 32 est réalisée alors que la première composition fluide 50 est déjà partiellement expansée. Le dégazage du moule 32 est ainsi facilité.

Après durcissement de la première composition fluide 50, conduisant à la formation de la mousse du bloc 16, l'élément 12 de rembourrage ainsi obtenu est démoulé.

Lors du démoulage, la présence de la nervure sur le couvercle 44 facilite la séparation de la couche 18 de renfort d'avec un excédent de matière, issu de la pulvérisation de deuxième composition fluide 52 autour de la deuxième surface 46 du couvercle.

Le siège 10 est ensuite obtenu en assemblant le revêtement 14 avec ledit élément 12 de rembourrage, notamment avec la deuxième face 22 du bloc 16.

Dans le cas où chacun du bloc 16 de mousse et de la couche 18 de renfort présente une haute teneur en polyuréthane, un recyclage de l'élément 12 de rembourrage est facilité par rapport à un bloc 16 et une couche 18 formée de matériaux distincts. Par ailleurs, un tel élément 12 de rembourrage présente une bonne résistance à l'abrasion au niveau de la couche 18 de renfort.

## Revendications

1. Procédé de fabrication d'un élément (12) de rembourrage pour siège (10) de véhicule, ledit élément de rembourrage comprenant : un bloc (16) de mousse, comprenant une première (20) et une deuxième (22) faces sensiblement opposées ; et une couche (18) de renfort, solidaire de la première face (20) du bloc de mousse ;
le procédé comprenant les étapes suivantes :
- fourniture d'un moule (32) comprenant un fond (40) de moule et un couvercle (44), aptes à s'assembler de manière amovible pour former une enceinte (48) ;
- le fond de moule et le couvercle étant dissociés, dépôt dans le fond (40) de moule d'une première composition fluide (50), précurseur du bloc (16) de mousse, ladite première composition fluide comprenant un agent d'expansion ; et dépôt dans le couvercle d'une couche de deuxième composition fluide (52), précurseur de la couche (18) de renfort ;
- expansion de la première composition fluide ; et assemblage du fond de moule et du couvercle au cours de ladite expansion, de sorte à solidariser le bloc de mousse et la couche de renfort.

2. Procédé de fabrication selon la revendication 1, dans lequel chacune des première (50) et deuxième (52) compositions comprend du polyuréthane.

3. Procédé de fabrication selon la revendication 1 ou 2, dans lequel le dépôt de la première composition fluide (50) est réalisé par coulage dans le fond (40) de moule.

4. Procédé de fabrication selon l'une des revendications précédentes, dans lequel le dépôt de la couche de deuxième composition fluide (52) est réalisé par pulvérisation sur le couvercle (44) de ladite deuxième composition fluide.

5. Procédé de fabrication selon l'une des revendications précédentes, dans lequel le couvercle (44) comprend : une surface (46) de moulage, configurée pour former l'enceinte (48) ; et une nervure continue ou non, formant une périphérie de ladite surface (46) de moulage.

6. Procédé de fabrication selon la revendication 5 prise en combinaison avec la revendication 4, dans lequel la pulvérisation sur le couvercle (44) de la deuxième composition fluide (52) est effectuée sur la surface (46) de moulage et sur la nervure.

7. Procédé de fabrication selon l'une des revendications précédentes, comprenant l'application d'un agent démoulant sur le couvercle (44) et/ou le fond (40) de moule, avant le dépôt des première et deuxième compositions fluides.

8. Elément (12) de rembourrage pour siège (10) de véhicule, issu d'un procédé selon l'une des revendications précédentes.

9. Elément de rembourrage selon la revendication 8 prise en combinaison avec la revendication 2, dans lequel le bloc (16) de mousse comprend au moins 50% en masse de polyuréthane par rapport à une masse totale dudit bloc ; et la couche (18) de renfort comprend au moins 50% en masse de polyuréthane par rapport à une masse totale de ladite couche.

10. Elément de rembourrage selon la revendication 9, dans lequel le bloc (16) de mousse comprend 100% en masse de polyuréthane par rapport à une masse totale dudit bloc ; et la couche (18) de renfort comprend 100% en masse de polyuréthane par rapport à une masse totale de ladite couche.

11. Elément de rembourrage selon l'une quelconque des revendications 8 à 10, dans lequel le bloc (16) de mousse présente une première épaisseur (24) comprise entre 5 mm et 200 mm entre les premières (20) et deuxième (22) faces ; et la couche (18) de renfort présente une deuxième épaisseur (26) comprise entre 30 µm et 5 mm.

12. Siège (10) de véhicule, comprenant un élément (12) de rembourrage selon l'une des revendications 8 à 11.

## Patentansprüche

1. Verfahren zum Herstellen eines Polsterelements (12) für einen Fahrzeugsitz (10), das Polsterelement umfassend: einen Schaumstoffblock (16), umfassend eine erste (20) und eine zweite (22) Fläche, die einander im Wesentlichen gegenüberliegen; und eine Verstärkungsschicht (18), die an der ersten Fläche (20) des Schaumstoffblocks befestigt ist;
wobei das Verfahren die folgenden Schritte umfasst:
- Bereitstellen einer Form (32), umfassend ein Formunterteil (40) und eine Abdeckung (44), die in der Lage sind, lösbar zusammengesetzt zu werden, um eine Einfassung (48) auszubilden;
- wenn das Formunterteil und die Abdeckung getrennt sind, Einbringen einer ersten Fluidzusammensetzung (50), die ein Vorläufer des Schaumstoffblocks (16) ist, in das Formunterteil (40), die erste Fluidzusammensetzung umfassend ein Treibmittel; und Einbringen einer Schicht einer zweiten Fluidzusammensetzung (52) in die Abdeckung, die ein Vorläufer der Verstärkungsschicht (18) ist;
- Expandieren der ersten Fluidzusammensetzung; und Verbinden des Formunterteils und der Abdeckung während des Expandierens, um den Schaumstoffblock und die Verstärkungsschicht aneinander zu befestigen.

2. Herstellungsverfahren nach Anspruch 1, wobei jede der ersten (50) und der zweiten (52) Zusammensetzung Polyurethan umfasst.

3. Herstellungsverfahren nach Anspruch 1 oder 2, wobei die erste Fluidzusammensetzung (50) durch Gießen in das Formunterteil (40) eingebracht wird.

4. Herstellungsverfahren nach einem der vorstehenden Ansprüche, wobei die Schicht der zweiten Fluidzusammensetzung (52) durch Aufsprühen der zweiten Fluidzusammensetzung auf die Abdeckung (44) aufgebracht wird.

5. Herstellungsverfahren nach einem der vorstehenden Ansprüche, wobei die Abdeckung (44) umfasst: eine Formoberfläche (46), die konfiguriert ist, um die Einfassung (48) auszubilden; und eine Rippe, die durchgehend oder nicht durchgehend sein kann, die einen Umfang der Formoberfläche (46) ausbildet.

6. Herstellungsverfahren nach Anspruch 5 in Kombination mit Anspruch 4, wobei das Aufsprühen der zweiten Fluidzusammensetzung (52) auf die Abdeckung (44) auf der Formoberfläche (46) und auf der Rippe durchgeführt wird.

7. Herstellungsverfahren nach einem der vorstehenden Ansprüche, umfassend ein Auftragen eines Trennmittels auf die Abdeckung (44) und/oder das Formunterteil (40) vor dem Einbringen der ersten und der zweiten Fluidzusammensetzung.

8. Polsterelement (12) für einen Fahrzeugsitz (10), das durch ein Verfahren nach einem der vorstehenden Ansprüche produziert wird.

9. Polsterelement nach Anspruch 8 in Kombination mit Anspruch 2, wobei der Schaumstoffblock (16) zu mindestens 50 Gew.-% Polyurethan in Bezug auf das Gesamtgewicht des Blocks umfasst; und die Verstärkungsschicht (18) zu mindestens 50 Gew.-% Polyurethan in Bezug auf das Gesamtgewicht der Schicht umfasst.

10. Polsterelement nach Anspruch 9, wobei der Schaumstoffblock (16) zu 100 Gew.-% Polyurethan in Bezug auf das Gesamtgewicht des Blocks umfasst; und die Verstärkungsschicht (18) zu 100 Gew.-% Polyurethan in Bezug auf das Gesamtgewicht der Schicht umfasst.

11. Polsterelement nach einem der Ansprüche 8 bis 10, wobei der Schaumstoffblock (16) eine erste Dicke (24) zwischen 5 mm und 200 mm zwischen der ersten (20) und der zweiten (22) Fläche aufweist; und die Verstärkungsschicht (18) eine zweite Dicke (26) zwischen 30 µm und 5 mm aufweist.

12. Fahrzeugsitz (10) umfassend ein Polsterelement (12) nach einem der Ansprüche 8 bis 11.

## Claims

1. A method for manufacturing a cushioning element (12) for a vehicle seat (10), said cushioning element comprising: a foam block (16) comprising a first (20) and a second (22) face that are substantially opposite; and a reinforcing layer (18) secured to the first face (20) of the foam block;
the method comprising the following steps:
- providing a mold (32) comprising a mold bottom (40) and a cover (44), capable of being removably assembled to form an enclosure (48);
- with the mold bottom and cover separated, depositing into the mold bottom (40) a first fluid composition (50), which is a precursor to the foam block (16), said first fluid composition comprising a blowing agent; and depositing into the cover a layer of a second fluid composition (52), which is a precursor to the reinforcing layer (18);
- expansion of the first fluid composition; and joining the mold bottom and the cover during said expansion, so as to secure the foam block and the reinforcing layer together.

2. The manufacturing method according to claim 1, wherein each of the first (50) and second (52) compositions comprises polyurethane.

3. The manufacturing method according to claim 1 or 2, wherein the first fluid composition (50) is deposited by pouring it into the mold bottom (40).

4. The manufacturing method according to any of the preceding claims, wherein the layer of the second fluid composition (52) is deposited by spraying said second fluid composition onto the cover (44).

5. The manufacturing method according to any of the preceding claims, wherein the cover (44) comprises: a molding surface (46), configured to form the enclosure (48); and a rib, which may or may not be continuous, forming a periphery of said molding surface (46).

6. The manufacturing method according to claim 5 in combination with claim 4, wherein the spraying of the second fluid composition (52) onto the cover (44) is carried out on the molding surface (46) and on the rib.

7. The manufacturing method according to any of the preceding claims, comprising applying a release agent to the cover (44) and/or the mold bottom (40) prior to depositing the first and second fluid compositions.

8. A cushioning element (12) for a vehicle seat (10), produced by a method according to any of the preceding claims.

9. The cushioning element according to claim 8 in combination with claim 2, wherein the foam block (16) comprises at least 50% by weight of polyurethane with respect to the total weight of said block; and the reinforcing layer (18) comprises at least 50% by weight of polyurethane with respect to the total weight of said layer.

10. The cushioning element according to claim 9, wherein the foam block (16) comprises 100% by weight of polyurethane with respect to the total weight of said block; and the reinforcing layer (18) comprises 100% by weight of polyurethane with respect to the total weight of said layer.

11. The cushioning element according to any of claims 8 to 10, wherein the foam block (16) has a first thickness (24) of between 5 mm and 200 mm between the first (20) and second (22) faces; and the reinforcing layer (18) has a second thickness (26) of between 30 µm and 5 mm.

12. A vehicle seat (10) comprising a cushioning element (12) according to any of claims 8 to 11.
